# FASCICULE DE BREVET EUROPEEN

(11) **EP 0 431 143 B1**
(45) Date de publication et mention de la délivrance du brevet: **04.08.1993**
(21) Numéro de dépôt: 90910765.8
(22) Date de dépôt: 29.06.1990
(51) Int. Cl.: B01J 19/32, C07C 29/15

(54) **PROCEDE ET DISPOSITIF DE TRANSFERT SIMULTANE DE MATIERE ET DE CHALEUR**
VERFAHREN UND VORRICHTUNG FÜR GLEICHZEITIGE STOFF- UND WÄRMEÜBERTRAGUNG
PROCESS AND DEVICE FOR THE SIMULTANEOUS TRANSFER OF MATERIAL AND HEAT

(30) Priorité: 30.06.1989 FR 8908856
(43) Date de publication de la demande: 12.06.1991
(73) Titulaire: INSTITUT FRANCAIS DU PETROLE, 92502 Rueil-Malmaison (FR)
(72) Inventeur: COLLIN, Jean-Claude, F-78540 Marsinval-Verneuil (FR); LARUE, Joseph, F-78240 Chambourcy (FR); ROJEY, Alexandre, F-92380 Garches (FR); VILTARD, Jean-Charles, F-78160 Marly-le-Roi (FR)
(86) Numéro de dépôt international: FR9000490
(87) Numéro de publication internationale: WO9100141

(56) Documents cités:
- EP-A- 0 154 516
- DE-A- 1 809 823
- FR-A- 797 915
- US-A- 4 574 007

## Description

L'invention concerne un procédé et un dispositif permettant de réaliser simultanément un transfert de matière entre une phase gazeuse et une ou deux phases liquides et des échanges de chaleur avec un autre fluide.

Cette invention fait appel à un dispositif comportant plusieurs compartiments délimités notamment par un empilement de plaques planes, chaque plaque étant espacée de la suivante. Cet espace de séparation peut être occupé par des plaques ondulées intercalaires. Ce type de disposition est déjà utilisé pour réaliser des échanges de chaleur. Les fluides circulent dans des passages formés entre deux plaques consécutives. Ces passages sont alternés et permettent de réaliser entre le flux chaud et le flux froid des circulations à co-courant, ou à courant croisés, ou à contre-courant. Ce type d'échangeur apporte un gain sur le coefficient de transfert thermique, mais ne permet pas un transfert de matière.

D'une maniére générale la technologie développée pour la réalisation de tels échangeurs de chaleur est largement connue. Comme cela a été dit, ces échangeurs sont composés par un empilage de tôles embouties. L'écartement entre chaque plaque est assuré par des intercalaires, constitués par des chicanes formées directement dans la tôle par emboutissage, ou par des plaques intercalaires appelées ondes, faites de métal déployé.

Les ondes intercalaires, permettent de maintenir un écartement uniforme entre les plaques, et pour certain de créer une surface d'échange secondaire. De facon générale, les ondes intercalaires augmentent la vitesse de passage des flux, et améliorent la tenue en pression de l'appareil. Toutes ces tôles sont assemblées entre elles, soit par soudage, ou brasage, ce qui permet une bonne étanchéité entre les plaques, mais interdit pratiquement le nettoyage mécanique de l'ensemble, soit par boulonnage ce qui oblige à utiliser des joints d'étanchéité entre les plaques pour éviter la communication entre les deux fluides et les fuites vers l'extérieur. Quel que soit le type de ces appareils, ils permettent tous plus ou moins d'augmenter par rapport à des échangeurs de type tubulaire la surface d'échange spécifique et le coéfficient de transfert de chaleur.

Toutes les entrées des compartiments recevant le même fluide (par exemple du fluide chaud) communiquent entre elles et sont en communication avec une boite appelée tête d'échangeur. Cette boite est solidaire de l'ensemble soit par soudage, soit par boulonnage avec joint d'étanchéité. On réalise le même type d'assemblage pour les connections de sortie. Ainsi, généralement, un échangeur alimenté par deux fluides distincts posséde quatre têtes, deux têtes d'entrée, une pour chaque fluide, et deux têtes de sortie, une pour chaque fluide.

Les documents US-A-4.574.007 et DE-A-1.809.823 montrent chacun un procédé d'échange de matière entre une phase gazeuse et au moins une phase liquide suivant lequel on réalise la mise en contact d'une fraction au moins de chacune desdites phases entre-elles par circulation dans des directions opposées de ladite phase gazeuse et de ladite phase liquide, et on réalise simultanément un échange de chaleur entre d'une part lesdites phases gazeuse et liquide et d'autre part un fluide. Selon ces documents, une fraction au moins de la phase gazeuse traverse successivement un ensemble de plaques perforées disposées horizontalement.

Il est également connu du document antérieur US-B-568.462 de faire circuler dans des compartiments à travers une plaque ou onde horizontale perforée et dans des sens opposés, un film de liquide condensé s'écoulant vers le bas et une phase vapeur s'écoulant vers le haut.

Enfin, le document EP-A2-0.154.516 divulgue une structure poreuse destinée à établir un contact entre fluides, et comportant des plaques perforées inclinées.

Cependant, de tels dispositifs présentent des inconvénients. Ils génèrent une perte de charge importante puisque les fluides sont obligés de traverser des plaques horizontales. Un tel montage nécessite d'augmenter la taille des perforations, et cela au détriment de la qualité du contat gaz-liquide, des débits traités, et de la rigidité mécanique du dispositif.

Ainsi, la présente invention concerne un procédé d'échange de matière entre une phase gazeuse G et au moins une phase liquide L, selon lequel on réalise la mise en contact d'une fraction au moins de chacune de ces phases entre elles par circulation dans des directions opposées de la phase gazeuse et de la phase liquide, et de plus, l'on réalise simultanément un échange de chaleur entre, d'une part, les phases gazeuse et liquide, et d'autre part un fluide F.

Selon la présente invention, on fait ruisseler la phase liquide le long ou à travers une paroi sensiblement verticale comportant des perforations et l'on fait traverser ces perforations par une fraction au moins de la phase gazeuse. Cette paroi comportant des perforations pourra être de forme ondulée.

La totalité de la phase gazeuse pourra traverser ces perforations.

On pourra réaliser la circulation de la phase liquide par gravité.

Le contact à contre-courant pourra être réalisé entre une phase vapeur G et une phase liquide L formée au moins en partie par condensation d'au moins une partie de la phase vapeur. La réfrigération nécessaire pour condenser une fraction de la phase gazeuse en vue d'obtenir la phase liquide pourra être fournie au moins en partie par échange de chaleur avec le fluide F.

Le contact à contre-courant pourra être réalisé entre une phase liquide L et une phase vapeur G formée au moins en partie par vaporisation d'au moins une partie de la phase liquide, la puissance thermique nécessaire pour vaporiser une fraction de la phase liquide en vue d'obtenir la phase gazeuse pourra être fournie, au moins en partie, par échange de chaleur avec le fluide F.

Le contact à contre-courant pourra être réalisé entre un gaz G contenant du méthane, des hydrocarbures dont le nombre de carbone est supérieur à 1, de l'eau et du méthanol et deux phases liquides L1 et L2, formées par condensation d'au moins une partie du gaz G. La phase liquide L1 pourra être formée principalement d'hydrocarbures autres que le méthane et la phase liquide L2 pourra être formée principalement par une solution de méthanol dans l'eau.

La présente invention concerne également un dispositif pour réaliser simultanément un échange de matière entre une phase gazeuse G et au moins une phase liquide L par contact à contre-courant, ainsi qu'un échange de chaleur avec au moins un fluide F. Ce dispositif comporte un empilement de plaques sensiblement planes et verticales séparées par des plaques intercalaires ondulées, constituant au moins deux séries alternées I et II de compartiments, les compartiments de la deuxième série II étant parcourus par le fluide F échangeant de la chaleur avec les phases liquide L et gazeuse G, les plaques intercalaires ondulées situées dans les compartiments de la première série I sont perforées et les compartiments de la première série I sont parcourus à contre-courant par la phase liquide L et la phase gazeuse G.

Selon l'invention les plaques intercalaires ondulées situées dans les compartiments de type I forment des ondes de direction sensiblement horizontales.

Les ondes que forment les plaques intercalaires délimitent des canaux dans lesquels circulent la phase liquide L et la phase gazeuse G.

Selon une variante de l'invention, au moins une partie de ces canaux débouche d'une part au niveau du bord supérieur des plaques et d'autre part au niveau du bord inférieur des plaques, ce qui permet de faire communiquer les canaux avec les têtes d'entrée et de sortie des fluides.

La fraction ouverte formée par les perforations pourra être comprise entre 3 % et 30 %, et de préférence entre 3 % et 20 %, relativement à la surface des plaques ondulées, ladite phase liquide pourra former un film à la surface des dites plaques ondulées et la dite phase gazeuse traversant les dites plaques ondulées de part en part à travers les dites perforations.

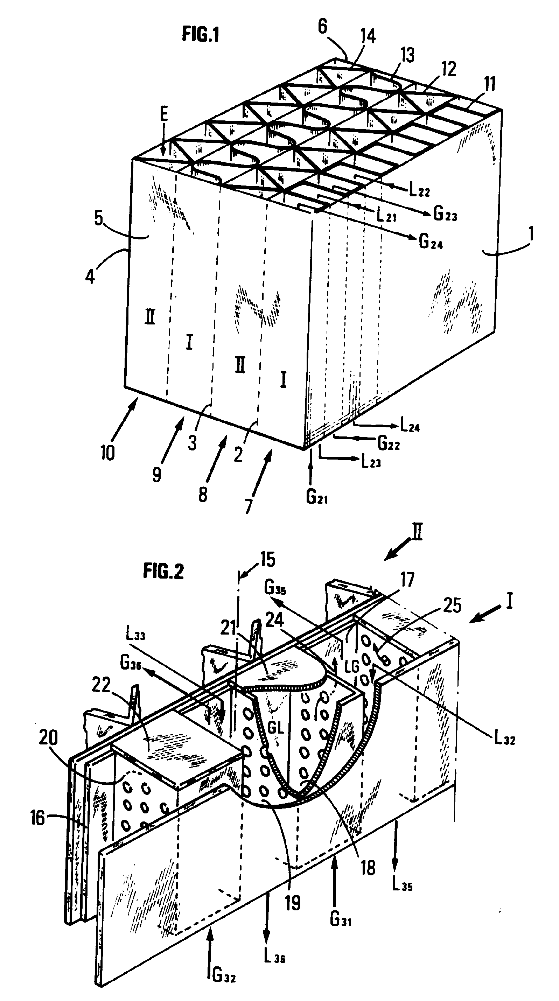

Les compartiments de la première série pourront être du type I et ceux de la deuxième série du type II. Les plaques intercalaires ondulées situées dans les compartiments de la première série I pourront former des ondes de direction verticale (Figs 1, 2), la phase gazeuse entrant dans le dispositif par des sous-compartiments dont les ouvertures sont situées d'un côté desdites plaques intercalaires ondulées et sortant du dispositif par d'autres sous-compartiments dont les sorties sont situées du côté opposé desdites plaques intercalaires ondulées.

Les plaques intercalaires ondulées situées dans les compartiments de type I pourront former des ondes de section carrée ou sinusoïdale.

Les perforations pourront être de forme circulaire et de diamétre compris entre 1 et 5 millimètres.

Les plaques intercalaires ondulées pourront être munies de promoteurs de turbulence.

L'espacement entre les plaques formant les compartiments du type I pourra être compris entre 3 et 50 millimètres.

Le dispositif selon l'invention pourra être réalisé au moyen de plaques en aluminium, assemblées par brasage.

Le dispositif selon l'invention pourra être appliqué à la mise en oeuvre du procédé selon l'invention.

La présente invention concerne également l'utilisation du dispositif présenté ci-dessus pour le traitement d'un effluent pétrolier.

Ainsi, la présente invention permet de réaliser dans des compartiments dits de type I un contact intime entre deux phases, l'une liquide L et l'autre gazeuse G en formant un film liquide à la surface de plaques et en faisant traverser ce film liquide par la phase gazeuse à travers des perforations réalisées dans les plaques ondulées intercalaires.

Le contact intime obtenu par le procédé et le dispositif selon l'invention, entre la phase liquide L et la phase gazeuse G, permet et favorise le transfert de matière entre les phases. Les dispositions différentes des plaques intercalaires ondulées situées dans les compartiments de type I forment des ondes de direction globalement verticale, strictement verticale, ou inclinées alternativement. Ces dispositions interviennent sur l'éfficacité du transfert de matière, et sur la perte de charge dans les compartiments de type I.

C'est pour ces raisons que l'invention porte sur différentes géometries et différents agencements des plaques intercalaires ondulées des compartiments de type I. Le choix des géométries et des agencements est fonction des cas à traiter, et doit répondre aux conditions opératoires imposées par les conditions particulières de mise en oeuvre. Les possibilités de choix portent essentiellement sur l'orientation de l'axe des ondulations par rapport à l'écoulement des fluides, sur la forme et la perforation des ondes.

L'utilisation d'ondes verticales perforées résoud de nombreux problèmes.

En effet, dans le cas d'ondes verticales, on observe des pertes de charge beaucoup plus faibles que dans le cas d'ondes horizontales (facteur pouvant être supérieur à 10), ce qui est important dans le cas d'une opération de traitement de gaz, une chute de pression nécessitant une recompression coûteuse du gaz.

D'autre part en utilisant des ondes verticales, on peut traiter des débits beaucoup plus importants de gaz, l'utilisation d'ondes horizontales se traduisant par un engorgement rapide. L'utilisation d'ondes verticales permet également une meilleure répartition des phases, l'écoulement de ces phases étant guidé tout le long de leur parcours ce qui conduit à une meilleure offre du contact.

Par ailleurs, l'utilisation d'ondes verticales permet d'opérer avec des taux de perforation faibles (3 à 20 %) et ainsi de faire jouer aux ondes un rôle mécanique de maintien entre plaques et de transfert de chaleur.

Les effets bénéfiques mentionnés précédemment sont particulièrement importants dans le cas d'un contact triphasique (une phase gazeuse et deux phases liquides) qui dans le cas d'ondes horizontales conduit à une perte de charge particulièrement élevée et un engorgement rapide, ainsi qu'à des difficultés dans la distribution des deux phases.

Le dispositif de répartition des phases liquide et gazeuse consistant à créer des sous compartiments permettant le passage de la phase liquide et de la phase gazeuse améliore l'efficacité.

On ne sortira pas du cadre de la présente invention si les différents passages des effluents comportent ou non un garnissage améliorant le contact entre phases contenues dans les compartiments du type I.

La présente invention sera mieux comprise et ses avantages apparaitront plus clairement à la description qui suit d'exemples particuliers nullement limitatifs, illustrés par les figures ci-annexées parmi lesquelles :
- la figure 1 représente un premier mode de réalisation du dispositif selon l'invention où les plaques ondulées intercalaires sont disposées verticalement,
- les figures 2 et 3 représentent un mode de réalisation dérivé du précédent, où les sous-compartiments d'un même compartiment dans lequel s'effectuent les échanges de matière sont obturés alternativement à leur partie supérieure,
- les figures 4, 9 et 10 illustrent différents exemples de perforations,
- la figure 6 illustre le procédé selon la présente invention appliqué à la rectification et à la déshydratation d'un gaz, et
- les figures 7 et 8 illustrent les ondes de forme sinusoïdale et celles de type carré.

Le dispositif de la figure 1 comporte un empilement de plaques 1, 2, 3, 4..., ainsi que deux autres plaques 5 et 6 perpendiculaires aux précédentes.

Cet ensemble de plaques forme des compartiments 7, 8, 9 et 10 qui sont de types différents alternativement, le type I et le type II. Les compartiments du type I, ou première série de compartiments, sont destinés à recevoir les fluides pour lesquels il y a échange de matière. L'un, G, de ces fluides est essentiellement gazeux, l'autre, L, est essentiellement liquide. Les compartiments du type II, ou deuxième série de compartiments, sont destinés à recevoir le fluide E avec lequel les fluides circulant dans les compartiments I échangent de la chaleur.

Des plaques ondulées intercalées 11, 12, 13 et 14 sont disposées entre les plaques empilées 1, 2, 3, 4. Ces plaques intercalaires maintiennent l'écartement entre les plaques empilées et participent à la cohésion de l'ensemble. De plus, elles favorisent les échanges thermiques. Enfin, selon la présente invention, les plaques intercalaires se trouvant dans les compartiments du type I comportent des perforations qui vont favoriser les échanges de matières entre les phases G et L.

Sur la figure 1, les plaques 1, 2, 3, 4, 5 et 6 sont verticales et les plaques intercalaires ondulées, notamment celles perforées des compartiments du type I, sont caractérisées par des ondulations de direction verticale. Des espaces libres ou sous-compartiments, sont formés par les ondulations des plaques 11 et 13, la ou les plaques intercalaires 11 ont la forme de créneaux et la ou les plaques intercalaires 13 ont des formes sinusoïdales. Le liquide est injecté dans la partie supérieure du dispositif dans ces espaces par exemple en L21, L22. Ce liquide ou la phase liquide issue de la condensation d'un gaz, ou l'ensemble des deux forment en ruissellement de haut en bas d'un film liquide sur l'ensemble ou sur une partie de la surface ou parois des ondes. Le gaz est injecté dans la partie inférieure du dispositif en G21, G22 réalisant ainsi une circulation à contre-courant de la phase liquide L relativement à la phase gazeuse G. Les perforations des plaques intercalaires des compartiments I permettent au moins à une partie du gaz de circuler d'un espace ou sous-compartiment vers un espace ou un sous-compartiment adjacent en traversant ainsi le film liquide qui ruisselle sur l'onde. Le contact intime ainsi réalisé entre la phase gazeuse G et la ou les phases liquides L entraine un transfert de matière entre ces phases et cela tout en échangeant simultanément de la chaleur avec le fluide F circulant dans les compartiments de type II. La phase gazeuse G est récupérée dans la partie supérieure du dispositif en G23, G24, la phase liquide est évacuée dans la partie inférieure en L23, L24.

Bien entendu, lorsque l'on fait référence à des perforations, il s'agit de celles portées par une paroi commune à deux sous-compartiments différents et pour lequel il peut y avoir passage du gaz d'un sous-compartiment à l'autre.

La figure 2 représente une version préférée de l'invention qui impose le passage de la phase vapeur, ou phase gazeuse, d'un espace vers les espaces adjacents. Cette version peut être décrite en partant de l'exemple de la figure 1.

L'échangeur selon l'invention est toujours en position verticale. L'axe des ondes 15 est disposé dans les compartiments de type I selon la direction génèrale de l'écoulement, c'est à dire verticalement. Les plaques intercalaires ondulées 16 des compartiment de type I forment des ondes, par exemple de section rectangulaire ou carrée. Les sous-compartiments ou espaces 17, 18, 19, 20 ainsi formés sont obturés alternativement dans leur partie supérieure par des bouchons 21, 22. Les espaces obturés 18, 20 sont de type dit GL, les autres de type dit LG. Ces bouchons peuvent être constitués par des morceaux de tôle soudés.

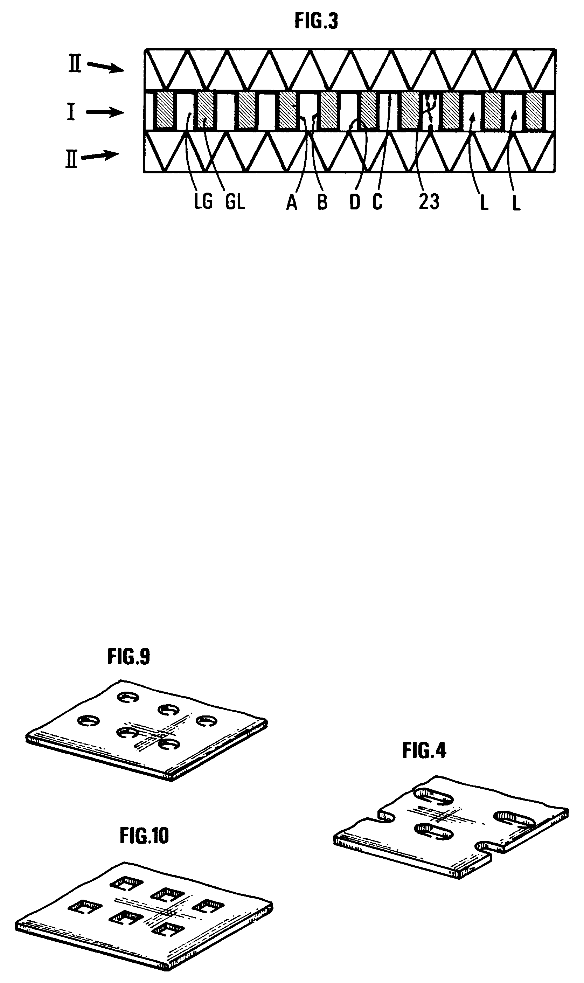

La figure 3 est une vue du dessus de l'échangeur de la figure 2.

Les parois délimitant les espaces LG et GL sont d'une part les parois A et B (Fig. 3) commune aux espaces LG et GL, perpendiculaires aux plaques de séparation des compartiments I et II, et perforées pour permettre la circulation du gaz de l'espace GL vers l'espace LG, d'autre part les parois C formées par l'onde, et les parois D formées par la plaque de séparation des compartiments I et II. Toutes deux sont munies de promoteurs de turbulence ayant pour rôle de casser le film liquide ruisselant sur les parois D et C afin d'augmenter le contact entre phase gazeuse et phase liquide. Le fluide E circule dans le compartiment II en échangeant de la chaleur avec la phase gazeuse et la ou les phases liquides circulant à contre-courant dans le compartiment I.

Sur la figure 2, les ondes des plaques ondulées intercalaires des compartiments II ont également un axe vertical et sont en forme de dents de scie.

La phase liquide est injectée dans la partie transversale supérieure en L32 L33 dans les espaces de type LG, de maniére à ruisseler de haut en bas sous forme de film liquide le long des parois des ondes. Le gaz est injecté dans la partie transversale inférieure du dispositif en G31 G32, dans les espaces de type GL et se déplace verticalement de bas en haut.

Cette disposition impose la circulation des différentes phases. La phase vapeur G circule de bas en haut dans l'espace de type GL. Les promoteurs de turbulence 23 favorisent le contact entre la phase vapeur et la phase liquide, notamment celle provenant d'une condensation de la phase vapeur G. De plus, la phase vapeur G introduite dans un compartiment GL est obligée, du fait des bouchons d'obturation 21, 22 en partie supérieure des espaces GL, de pénétrer dans les espaces LG par les perforations des ondes sur les parois A et B, et de ce fait est obligée de traverser la phase liquide L qui ruisselle sous forme d'un film liquide de haut en bas tout le long des parois perforées des ondes, comme cela est représenté par les flêches 24 et 25. Ceci entraine un contact intime à contre-courant entre la phase gazeuse G et la phase liquide L, permettant un échange de matière important entre ces phases. Cette configuration permet, par transfert de matière, un enrichissement de la phase gazeuse G en composés légers provenant de la phase liquide L et de ce fait un enrichissement de la phase liquide en composés lourds provenant de la phase gazeuse. Ce transfert de matière d'une phase vers l'autre est accompagné d'un transfert de chaleur avec le fluide F, par l'intermédiaire des ondes qui sont réalisées de préférence en materiau conducteur. La phase liquide L est récupérée en L35 L36 dans la partie inférieure du dispositif en dessous de l'injection de gaz. La phase vapeur est récupérée dans la partie supérieure en G35, G36 placée au dessus de l'injection liquide L32 L33.

Pour éviter que les gaz G31, G32 ne pénètrent dans les compartiments du type LG 18, 20, par leur partie basse, ces compartiments du type LG pourront se prolonger jusqu'à pénètrer dans la phase liquide se trouvant à la partie basse du dispositif selon l'invention. Les compartiments du type GL ne pénétrant pas dans cette phase liquide, il sera possible de les alimenter en gaz par les espaces libres se trouvant entre l'interface de la phase liquide au fond du dispositif et la partie basse de ces compartiments GL.

Ainsi, le procédé selon l'invention consiste à réaliser simultanément un échange de matière entre une phase gazeuse G et au moins une phase liquide L par contact à contre-courant et un échange de chaleur avec au moins un fluide F. Le contact est réalisé dans un dispositif comportant un empilement de plaques planes verticales séparées par des plaques intercalaires ondulées, constituant au moins deux séries alternées I et II de compartiments, les compartiments I étant parcourus à contre-courant par la phase liquide L et la phase gazeuse G et les compartiments II par le fluide F échangeant de la chaleur avec les phases liquide L et gazeuse G. Les plaques intercalaires ondulées situées dans les compartiments I sont perforées, la fraction ouverte formée par les perforations est comprise entre 3 % et 30 %, ladite phase liquide formant un film à la surface desdites plaques ondulées et la phase gazeuse traverse les plaques ondulées de part en part à travers les perforations.

Dans l'exemple des figures 1 et 2, les plaques intercalaires ondulées situées dans les compartiments de type I forment des ondes de direction verticale.

L'échange de chaleur avec le fluide F est simultané et se fait par l'intermédiaire des plaques intercalaires ondulées réalisées en matériau conducteur de chaleur. La phase liquide s'écoule au travers des perforations et elle est récupérée dans la partie inférieure du dispositif, la phase gazeuse étant évacuée dans la partie supérieure. Les canaux joignent directement ces deux parties.

La comparaison des différents agencements des ondes, axes verticaux ou inclinés et à lignes ou parois brisées, porte essentiellement sur l'efficacité du transfert de matière.

Le procédé selon l'invention ne nécessite pas obligatoirement, comme cela a été décrit dans les différents modes de réalisation décrits précédemment, l'injection d'une phase liquide dans la partie supérieure du dispositif. En effet, pour certaines applications, par exemple pour certains traitements de gaz riche, il n'est pas nécessaire de prévoir une injection liquide. Dans ce cas le gaz est injecté en partie inférieure du dispositif, dans les compartiments I. Le transfert de chaleur entre le compartiment I et le compartiment II entraine une condensation des composés les plus lourds du gaz à traiter. Ce condensat se forme sur la surface des ondes, ruisselle de haut en bas en formant un film liquide ou une interface liquide, ou encore les deux à la fois en fonction de l'agencement retenu. Dans ces conditions, le condensat est en contact intime avec la phase gazeuse qui circule de bas en haut à travers les perforations des ondes, et traverse ainsi le film liquide ou l'interface liquide entrainant un transfert de matière entre la phase gazeuse et la phase liquide. Le gaz ainsi traité sort dans la partie supérieure du dispositif, la phase liquide composés des produits les plus lourds du gaz est évacuée en partie basse du dispositif.

Le procédé selon l'invention ne nécessite pas obligatoirement l'injection d'un gaz dans la partie inférieure du dispositif. En effet dans certaines applications, par exemple pour la régénération d'un solvant d'absorption pollué par des composés volatils, le procédé permet une purification de ce solvant par vaporisation des composés volatils. Dans ce cas le solvant est injecté en partie supérieure du dispositif, dans les compartiments de type I, et circule de haut en bas. Le fluide caloporteur F circule dans les compartiments de type II et apporte de l'énergie thermique au solvant circulant dans les compartiments I. L'échange de chaleur ainsi réalisé entraine une vaporisation des composés les plus volatils du solvant en formant une phase gazeuse, qui circule de bas en haut à travers les perforations des ondes, traversant ainsi l'interface liquide, ou le film liquide, ou les deux en fonction du choix du dit agencement. Dans ces conditions, la phase gazeuse et la phase liquide circulent à contre-courant, sont en contact intime, ce qui permet un transfert de matière entre phase. Le solvant ainsi débarrassé des composés volatils est recueilli dans la partie inférieure du dispositif, la phase gazeuse ainsi générée est évacuée en partie supérieure du dispositif.

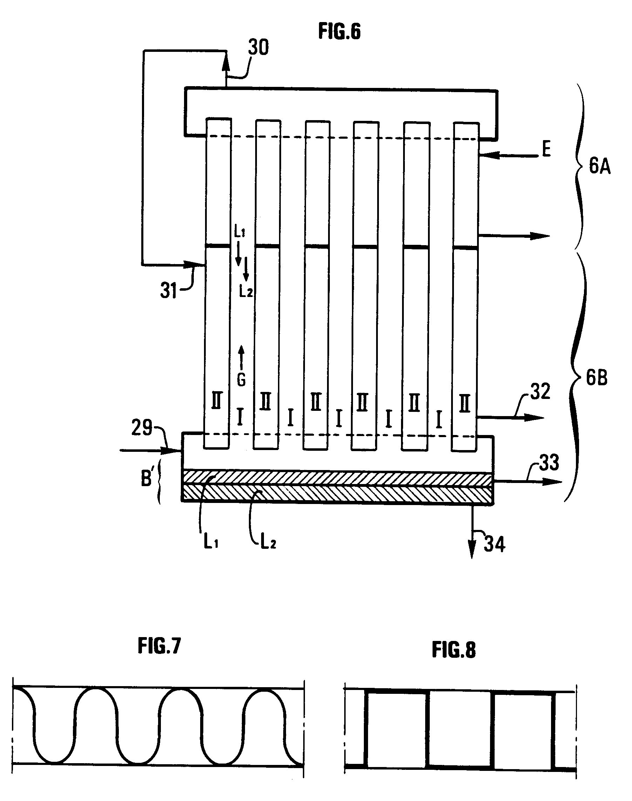

Le procédé selon l'invention, permet également un contact à contre-courant entre une phase gazeuse G et deux phases liquides L1 et L2 non miscibles. Cette possibilité permet de réaliser, par exemple, dans un même dispositif la rectification et la déshydratation d'un gaz. Le schéma d'un tel procédé peut être décrit à partir d'un exemple de réalisation illustré par le schéma de la figure 6. Le gaz est injecté dans la partie inférieure du dispositif en 29 dans les compartiments de type I. Ce gaz est composé par exemple de méthane, d'hydrocarbures dont le nombre de carbone est supérieur à celui du méthane, d'eau et de méthanol. Le refroidissement de ce gaz est assuré par le fluide circulant dans les compartiments de type II de la zone 6B. Cet apport de frigories entraine une condensation d'une partie du gaz injecté en deux phases liquides distinctes. La phase liquide L1 est composée essentiellement d'hydrocarbures autres que le méthane, la phase liquide L2 est constituée majoritairement de méthanol et d'eau. La phase gazeuse G circule de bas en haut et pénétre dans les compartiments I de la zone 6A du dispositif. La zone 6A surmonte et prolonge la zone 6B. Cette phase G est refroidie par l'intermédiaire d'un fluide F circulant dans les compartiments II de ladite zone 6A. Les phases liquides L1 et L2 formées par condensation circulent de haut en bas dans toute ou partie du dispositif. Le gaz traité évacué en 30 dans la partie supérieure de la zone 6A, est réinjecté en 31 dans les compartiments de type II de la zone 6B du dispositif, afin de réaliser un échange thermique pour apporter les frigories du gaz traité au gaz à traiter. La condensation de ce dernier entraine ainsi la formation des phases liquides L1 et L2. Le gaz traité est évacué du dispositif en 32. Les phases liquides L1 et L2 sont séparées par décantation dans la partie inférieure de la zone B, et évacuées respectivement par les lignes 33 et 34. Le transfert de matière entre phases est lié, d'une part, comme dans les exemples précédents, à la circulation à contre-courant de la phase vapeur et des deux phases liquides et, d'autre part, au contact intime entre phases réalisé par la circulation de la phase vapeur au travers des perforations des ondes, permettant ainsi à cette phase gazeuse de pénétrer le film liquide ou l'interface liquide formé sur la paroi des ondes par les dites phases liquides L1 et L2. Ce transfert de matière entre phases est accompagné simultanément d'un transfert thermique avec un fluide caloporteur E et dans la partie inférieure avec le gaz traité, pour récupérer les frigories contenues dans ce gaz, afin d'améliorer le bilan énergétique du procédé.

Ainsi, le dispositif de mise en oeuvre de ce procédé comporte des compartiments II dont chacun est séparé en deux. On réalise ainsi deux circuits différents de fluide caloporteur, ces circuits étant superposés et délimitant les zones 6A et 6B.

Les ondes peuvent être de formes différentes. La section peut être sinusoïdale (Fig. 7), ou carrée, ou encore à créneaux (Fig. 8), permettant une surface plus grande de l'interface liquide et un meilleur contact entre les plaques séparant les compartiments I et II, favorisant ainsi le transfert thermique.

Les perforations peuvent être réalisées selon différentes géométries, circulaires (Fig. 9), carrées (Fig. 10), hexagonales, oblongues (Fig. 4). Dans le cas où les trous sont oblongs, la génératrice de ces trous est de préférence parallèle à l'axe des ondes.

La distance entre plaques d'un compartiment est comprise par exemple entre 3 et 50 millimètres, de préférence entre 3 et 20 ou encore entre 3 et 15 millimètres. Dans ce cas les trous de forme circulaire auront de préférence un diamétre inférieur au tiers de l'écartement entre plaques, ce qui donne pour l'exemple considéré des diamétres compris entre 1 et 5 millimètres. La fraction des passages perforée est comprise entre 3 % et 30 %, de préférence entre 3 % et 20 %.

L'ensemble du dispositif peut être réalisé à l'aide de différents matériaux. Il peut être réalisé, par exemple, en aluminium ou en alliages légers (duralumin ...), l'assemblage étant alors, par exemple, effectué par brasage. Il peut être réalisé aussi en acier, par exemple en acier inoxydable (316, 304...). L'emploi de matériaux non métalliques, en particulier matériaux polymères et céramiques peut être également envisagé, à condition que ces matériaux présentent des caractéristiques de conductivité thermique compatibles avec l'application visée.

L'alimentation des différents compartiments se fait de manière connue de l'homme de l'art.

## Revendications

1. Procédé d'échange de matière entre une phase gazeuse et au moins une phase liquide suivant lequel on réalise la mise en contact d'une fraction au moins de chacune desdites phases entre-elles par circulation dans des directions opposées de ladite phase gazeuse et de ladite phase liquide, et on réalise simultanément un échange de chaleur entre d'une part lesdites phases gazeuse et liquide et d'autre part un fluide (F), caractérisé en ce que l'on fait ruisseler ladite phase liquide le long ou à travers une paroi sensiblement verticale comportant des perforations et en ce que l'on fait traverser lesdites perforations par une fraction au moins de ladite phase gazeuse.

2. Procédé selon la revendication 1, caractérisé en ce que l'on fait traverser lesdites perforations par la totalité de ladite phase gazeuse.

3. Procédé selon l'une des revendications précédentes, caractérisé en ce que lesdites parois sensiblement verticales délimitent des canaux dans lesquels circulent au moins partiellement la phase liquide (L) et la phase gazeuse (G) et en ce qu'une partie au moins desdits canaux relie directement les entrées et les sorties des phases gazeuses et liquides.

4. Procédé selon l'une des revendications 1 à 3, caractérisé en ce que l'on réalise la circulation de ladite phase liquide par gravité.

5. Procédé selon l'une des revendications 1 à 4, caractérisé en ce que le contact à contre-courant est réalisé entre une phase vapeur (G) et une phase liquide (L) formée au moins en partie par condensation d'au moins une partie de la phase vapeur, la réfrigération nécessaire pour condenser une fraction de la phase gazeuse en vue d'obtenir la phase liquide étant fournie au moins en partie par échange de chaleur avec le fluide (F).

6. Procédé selon l'une des revendications 1 à 4, caractérisé en ce que le contact à contre-courant est réalisé entre une phase liquide (L) et une phase vapeur (G) formée au moins en partie par vaporisation d'au moins une partie de la phase liquide, la puissance thermique nécessaire pour vaporiser une fraction de la phase liquide en vue d'obtenir la phase gazeuse étant fournie au moins en partie par échange de chaleur avec le fluide (F).

7. Procédé selon l'une des revendications 1 à 5, caractérisé en ce que le contact à contre-courant est réalisé entre un gaz (G) contenant du méthane, des hydrocarbures dont le nombre de carbone est supérieur à celui du méthane, de l'eau et du méthanol et deux phases liquides (L1) et (L2), formées par condensation d'au moins une partie du gaz (G), la phase liquide (L1) étant formée principalement d'hydrocarbures autres que le méthane et la phase liquide (L2) étant formée principalement par une solution de méthanol dans l'eau.

8. Dispositif pour réaliser simultanément un échange de matière entre une phase gazeuse (G) et au moins une phase liquide (L) par contact à contre-courant, ainsi qu'un échange de chaleur avec au moins un fluide (F), ledit dispositif comportant un empilement de plaques sensiblement planes et verticales (1, 2, 3, 4) séparées par des plaques intercalaires (11, 12, 13, 14) ondulées, constituant au moins deux séries alternées (I) et (II) de compartiments, les compartiments de la deuxième série étant parcourus (II) par le fluide (F) échangeant de la chaleur avec les phases liquide (L) et gazeuse(G), les plaques intercalaires ondulées situées dans les compartiments de la première série (I) étant perforées et les compartiments de la première série (I) étant parcourus à contre-courant par la phase liquide (L) et la phase gazeuse (G), caractérisé en ce que les plaques intercalaires ondulées situées dans les compartiments de type (I) forment des ondes de direction sensiblement horizontale.

9. Dispositif selon la revendications 8, caractérisé en ce que lesdites plaques intercalaires délimitent des canaux dans lesquels circulent les phases liquides (L) et gazeuse (G) et en ce qu'au moins certains de ces canaux relient directement les parties supérieures et inférieures du dispositif.

10. Dispositif selon la revendication 8, caractérisé en ce que la phase gazeuse entre dans le dispositif par des sous-compartiments dont les ouvertures sont situées à une extrémité desdites plaques intercalaires ondulées et sort du dispositif par des sous-compartiments dont les sorties sont situées à l'extrémité opposé desdites plaques intercalaires ondulées.

11. Dispositif selon l'une des revendications 8 à 10, caractérisé en ce que la fraction ouverte formée par les perforations est comprise entre 3 % et 30%, et de préférence entre 3 % et 20 %, relativement à la surface des plaques ondulées, ladite phase liquide s'écoulant à la surface desdites plaques ondulées et ladite phase gazeuse traversant lesdites plaques ondulées de part en part à travers lesdites perforations.

12. Dispositif selon l'une des revendications 8 à 11, caractérisé en ce que les plaques intercalaires ondulées situées dans les compartiments de type (I) forment des ondes de section carrée ou sinusoïdale (Figs 7, 8).

13. Dispositif selon l'une des revendications 8 à 12, caractérisé en ce que les perforations sont de forme circulaire et de diamétre compris entre 1 et 5 millimètres.

14. Dispositif selon l'une des revendications 8 à 13, caractérisé en ce que les plaques intercalaires ondulées sont munies de promoteurs de turbulence.

15. Dispositif selon l'une des revendications 8 à 14, caractérisé en ce que l'espacement entre les plaques formant les compartiments (I) est compris entre 3 et 50 millimètres.

16. Dispositif selon l'une des revendications 8 à 15, caractérisé en ce que le dispositif D est réalisé au moyen de plaques en aluminium, assemblées par brasage.

17. Utilisation du dispositif selon l'une des revendication 8 à 16 pour le traitement d'un effluent pétrolier.

## Patentansprüche

1. Verfahren zum Stoffaustausch zwischen einer gasförmigen Phase und wenigstens einer flüssigen Phase, wonach man die Kontaktierung wenigstens einer Fraktion jeder dieser Phasen untereinander durch Zirkulation, in Richtungen entgegengesetzt zu dieser gasförmigen Phase und dieser flüssigen Phase herbeiführt und gleichzeitig einen Wärmeaustausch einerseits zwischen dieser gasförmigen Phase und dieser flüssigen Phase und andererseits einem Fluid (F) herbeiführt, dadurch gekennzeichnet, daß man diese flüssige Phase längs oder durch eine im wesentlichen vertikale Wand, die Perforationen umfasst, rieseln lässt und daß man diese Perforationen durch wenigstens eine Fraktion dieser gasförmigen Phase durchsetzen lässt.

2. Verfahren nach Anspruch 1, dadurch gekennzeichnet, daß man veranlasst, daß diese Perforationen durch die gasförmige Phase insgesamt durchsetzt werden.

3. Verfahren nach einem der vorhergehenden Ansprüche, dadurch gekennzeichnet, daß diese im wesentlichen vertikalen Wandungen Kanäle begrenzen, in denen wenigstens teilweise die flüssige Phase (L) und die gasförmige Phase (G) zirkulieren und daß wenigstens ein Teil dieser Kanäle direkt die Eingänge und die Ausgänge der gasförmigen und flüssigen Phasen verbindet.

4. Verfahren nach einem der Ansprüche 1 - 3, dadurch gekennzeichnet, daß man die Zirkulation dieser flüssigen Phase vermittels Schwerkraft herbeiführt.

5. Verfahren nach einem der Ansprüche 1 - 4, dadurch gekennzeichnet, daß der Gegenstrom Kontakt zwischen einer Dampf-Phase (G) und einer Flüssigkeits-Phase (L) herbeigeführt wird, die wenigstens zum Teil durch Kondensation wenigstens eines Teils der Dampf-Phase gebildet wird, wobei die zur Kondensierung einer Fraktion der gasförmigen Phase zum Erhalt der flüssigen Phase notwenigen Kühlung wenigstens zum Teil durch Wärmeaustausch mit dem Fluid (F) beliefert wird.

6. Verfahren nach einem der Ansprüche 1 - 4, dadurch gekennzeichnet, daß der Gegenstromkontakt herbeigeführt wird zwischen einer flüssigen Phase (L) und einer dampfförmigen Phase (G), welche wenigstens zum Teil durch Verdampfung wenigstens eines Teils der flüssigen Phase gebildet wurde, wobei die zur Verdampfung einer Fraktion der flüssigen Phase zum Erhalt der gasförmigen Phase notwenige Wärmeleistung wenigstens zum Teil durch Wärmeaustausch mit dem Fluid (F) geliefert wird.

7. Verfahren nach einem der Ansprüche 1 - 5, dadurch gekennzeichnet, daß der Gegenstromkontakt herbeigeführt wird zwischen einem Methan enthaltenden Gas (G), Kohlenwasserstoffen, deren Kohlenstoffzahl grösser als die des Methans ist, Wasser und Methanol sowie zwei flüssigen Phasen (L1) und (L2), welche durch Kondensation wenigstens eines Teils des Gases (G) gebildet wurden, wobei die flüssige Phase (L1) hauptsächlich aus Kohlenwasserstoffen ausser Methan und die flüssige Phase (L2) hauptsächlich durch eine Lösung von Methanol im Wasser gebildet wird.

8. Vorrichtung zur gleichzeitigen Durchführung eines Stoffaustausches zwischen einer gasförmigen Phase (G) und wenigstens einer flüssigen Phase (L) durch Gegenstromkontakt sowie einem Wärmeaustausch mit wenigstens einem Fluid (F), wobei die Vorrichtung einen Stapel von im wesentlichen planen und vertikalen Platten (1, 2, 3, 4) umfasst, welche durch gewellte Zwischenplatten (11, 12, 13, 14) getrennt sind, die wenigstens zwei abwechselnde Reihen (I) und (II) von Kammern bilden, wobei die Kammern der zweiten Reihe durch das Fluid (F) durchströmt werden (II), das Wärme mit der flüssigen (L) und gasförmigen (G) Phase austauscht, wobei die gewellten Zwischenplatten, die in den Kammern der ersten Reihe (I) angeordnet sind, perforiert sind und die Kammern der ersten Reihe (I) im Gegenstrom von der flüssigen Phase (L) und der gasförmigen Phase (G) durchströmt werden, dadurch gekennzeichnet, daß die gewellten Zwischenplatten in den Kammern vom Typ (I) Wellen im wesentlichen horizontaler Richtung bilden.

9. Vorrichtung nach Anspruch 8, dadurch gekennzeichnet, daß diese Zwischenplatten Kanäle begrenzen, in denen die flüssige Phase (L) und gasförmige Phase (G) zirkulieren und daß wenigstens Gewisse dieser Kanäle direkt die oberen Teile und die unteren Teile der Vorrichtung verbinden.

10. Vorrichtung nach Anspruch 8, dadurch gekennzeichnet, daß die gasförmige Phase in die Vorrichtung über Unterkammern eintritt, deren Öffnungen an einem Ende dieser gewellten Zwischenplatten angeordnet sind und aus der Vorrichtung über Unterkammern austritt, deren Ausgänge am gegenüberliegenden Ende dieser gewellten Zwischenplatten angeordnet sind.

11. Vorrichtung nach einem der Ansprüche 8 - 10, dadurch gekennzeichnet, daß die offene durch die Perforationen gebildete Fraktion zwischen 3% und 30% und vorzugsweise zwischen 3% und 20%, relativ zur Oberfläche der gewellten Platten liegt, wobei die flüssige Phase an der Oberfläche dieser gewellten Platten strömt und diese gasförmige Phase diese gewellten Platten zu beiden Seiten quer durch diese Perforationen hindurch durchsetzt.

12. Vorrichtung nach einem der Ansprüche 8 - 11, dadurch gekennzeichnet, daß die gewellten in den Kammern vom Typ (I) angeordneten Zwischenplatten Wellen quadratischen oder sinusförmigen Querschnitts (Figuren 7, 8) bilden.

13. Vorrichtung nach einem der Ansprüche 8 - 12, dadurch gekennzeichnet, daß die Perforationen von kreisförmiger Gestalt und von einem Durchmesser zwischen 1 und 5 mm sind.

14. Vorrichtung nach einem der Ansprüche 8 - 13, dadurch gekennzeichnet, daß die gewellten Zwischenplatten mit Turbulenzpromotern ausgestattet sind.

15. Vorrichtung nach einem der Ansprüche 8 - 14, dadurch gekennzeichnet, daß der Raum zwischen den die Kammern (I) bildenden Platten zwischen 3 und 50 mm beträgt.

16. Vorrichtung nach einem der Ansprüche 8 - 15, dadurch gekennzeichnet, daß die Vorrichtung D gebildet wird vermittels Platten aus Aluminium, die durch Löten zusammengefügt sind.

17. Anwendung der Vorrichtung nach einem der Ansprüche 8 - 16 auf die Behandlung eines Erdölabstroms.

## Claims

1. Method for the exchange of matter between a gaseous phase and at least one liquid phase, according to which at least a portion of each of these phases are brought into contact with one another through circulation of the said gaseous phase and the said liquid phase in opposite directions and an exchange of heat is simultaneously effected between on the one hand the said gaseous and liquid phases and on the other hand a fluid (F), characterised in that the said liquid phase is caused to trickle along or through a substantially vertical wall with perforations and in that at least a portion of the said gaseous phase is caused to pass through the said perforations.

2. Method according to Claim 1, characterised in that all the said gaseous phase is caused to pass through the said perforations.

3. Method according to one of the preceding claims, characterised in that the said substantially vertical walls define channels in which the liquid phase (L) and gaseous phase (G) flow at least partially and in that at least some of the said channels directly connect the inlets and outlets for the gaseous and liquid phases.

4. Method according to one of Claims 1 to 3, characterised in that the flow of the said liquid phase is produced by gravity.

5. Method according to one of Claims 1 to 4, characterised in that the counter-current contact is produced between a vapour phase (G) and a liquid phase (L) formed at least partly by condensation of at least some of the vapour phase, the refrigeration required for condensing a portion of the gaseous phase for the purpose of obtaining the liquid phase being provided at least partly by heat exchange with the fluid (F).

6. Method according to one of Claims 1 to 4, characterised in that the counter-current contact is produced between a liquid phase (L) and a vapour phase (G) formed at least partly by vaporisation of at least part of the liquid phase, the thermal power required to vaporise a portion of the liquid phase for the purpose of obtaining the gaseous phase being provided at least partly by heat exchange with the fluid (F).

7. Method according to one of Claims 1 to 5, characterised in that the counter-current contact is produced between a gas (G) containing methane, hydrocarbons with a carbon number greater than that of methane, water and methanol, and two liquid phases (L1) and (L2), formed by condensation of at least part of the gas (G), the liquid phase (L1) being formed principally by hydrocarbons other than the methane, and the liquid phase (L2) being formed principally by a solution of methanol in water.

8. Device for effecting simultaneously an exchange of matter between a gaseous phase (G) and at least one liquid phase (L) by counter-current contact, and heat exchange with at least one fluid (F), the said device including a series of substantially flat vertical plates (1, 2, 3, 4) separated by corrugated intermediate plates (11, 12, 13, 14), constituting at least two alternating series (I) and (II) of compartments, the compartments in the second series (II) having pass through them the fluid (F) exchanging heat with the liquid (L) and gaseous (G) phases, the corrugated intermediate plates situated in the compartments in the first series (I) being perforated and the compartments in the first series (I) having the liquid (L) and gaseous (G) phases pass through them in counter-current, characterised in that the corrugated intermediate plates situated in the type (I) compartments form waves with a substantially horizontal direction.

9. Device according to Claim 8, characterised in that the said intermediate plates define channels in which the liquid (L) and gaseous (G) phases flow and in that at least some of these channels directly connect the top and bottom parts of the device.

10. Device according to Claim 8, characterised in that the gaseous phase enters the device through the subcompartments whose openings are situated at one end of the said corrugated intermediate plates and leave the device through the subcompartments whose outlets are situated at the opposite end of the said corrugated intermediate plates.

11. Device according to one of Claims 8 to 10, characterised in that the open portion formed by the perforations is between 3% and 30%, and preferably between 3% and 20%, relative to the surface area of the corrugated plates, the said liquid phase flowing at the surface of the said corrugated plates and the said gaseous phase passing right through the said corrugated plates through the said perforations.

12. Device according to one of Claims 8 to 11, characterised in that the corrugated intermediate plates situated in the type (I) compartments form waves with a square or sinusoidal cross section (Figs 7, 8).

13. Device according to one of Claims 8 to 12, characterised in that the perforations are circular in shape and have a diameter of between 1 and 5 millimetres.

14. Device according to one of Claims 8 to 13, characterised in that the corrugated intermediate plates are provided with turbulence promoters.

15. Device according to one of Claims 8 to 14, characterised in that the spacing between the plates forming the type (I) compartments is between 3 and 50 millimetres.

16. Device according to one of Claims 8 to 15, characterised in that the device D is produced by means of aluminium plates, assembled by brazing.

17. Use of the device according to one of Claims 8 to 16 for the treatment of a petroleum effluent.
